# EUROPEAN PATENT APPLICATION

(11) **EP 4 737 904 A1**
(43) Date of publication of application: **06.05.2026**
(21) Application number: 24831316.5
(22) Date of filing: 19.02.2024
(51) Int. Cl.: G01N 35/00, G01N 35/10

(54) **SAMPLE ANALYSIS SYSTEM**

(30) Priority: 29.06.2023 JP 2023107186
(71) Applicant: SHIMADZU CORPORATION, Kyoto-shi, Kyoto 604-8511 (JP)
(72) Inventor: KATO, Rui, Kyoto-shi, Kyoto 604-8511 (JP); NISHI, Nobuhiko, Kyoto-shi, Kyoto 604-8511 (JP); MATSUSHITA, Tomoyoshi, Kyoto-shi, Kyoto 604-8511 (JP); WAKASUGI, Sachiko, Kyoto-shi, Kyoto 604-8511 (JP); OHO, Kensuke, Kyoto-shi, Kyoto 604-8511 (JP); KOBAYASHI, Yuko, Kyoto-shi, Kyoto 604-8511 (JP); SAIMURA, Tetsuya, Kyoto-shi, Kyoto 604-8511 (JP)
(74) Representative: Müller-Boré & Partner Patentanwälte PartG mbB
(86) International application number: PCT/JP2024/005820
(87) International publication number: WO 2025/004436

(57) **Abstract**

To simplify the setting of automatic continuous analysis. A control device (700) included in a sample analysis system is provided with a selection receiving unit (701, 702, 706, 707) that displays buttons corresponding to each of sample containers (201) in an autosampler (200) and each of liquid supply units (300, 400, 500) provided outside the autosampler and allows a user to select an appropriate one. The control device is also provided with a liquid supply control unit (703). When a button corresponding to a sample container is selected, the liquid supply control unit controls the autosampler to insert a sampling needle (206) into the sample container corresponding to the button and controls a flow path switching valve to connect the autosampler and a sample analysis apparatus. When a button corresponding to a liquid supply unit is selected, the liquid supply control unit controls the flow path switching valve to connect the liquid supply unit corresponding to the button to the sample analysis apparatus and controls the autosampler to move the sampling needle (206) to a standby position (209).

## Description

### TECHNICAL FIELD

The present invention relates to a sample analysis system including an autosampler and a sample analysis apparatus that analyzes a liquid sample supplied from the autosampler.

### BACKGROUND ART

When performing continuous analysis on a plurality of liquid samples using an analysis apparatus such as a mass spectrometer or a liquid chromatograph, an autosampler is generally used, which automatically and sequentially collects liquid samples one by one from a large number of prepared sample containers and introduces them into the analysis apparatus (see, for example, Patent Literature 1). An autosampler includes, for example, a tray placement unit where one or more sample trays loaded with a plurality of sample containers holding samples are placed; a bottle placement unit where one or more bottles holding a rinsing solution, a calibration sample, or the like (hereinafter collectively referred to as "rinsing solution, etc.") are placed; a suction nozzle for aspirating liquid from the sample containers or the bottles; and a nozzle moving mechanism for moving the suction nozzle in the horizontal and vertical directions.

When performing automatic continuous analysis using a sample analysis system that includes such an autosampler and an analysis apparatus, an analysis operator first loads a plurality of sample containers holding samples to be analyzed onto a sample tray, sets the sample tray in the tray placement unit within the autosampler, and also sets bottles holding the rinsing solution, etc., in the bottle placement unit. Thereafter, the analysis operator performs a setting operation for the automatic continuous analysis on a control device (typically a personal computer with dedicated control software installed) for controlling the autosampler and the analysis apparatus.

In the setting operation, for each analysis step in the automatic continuous analysis, matters are set such as which sample container (or a bottle holding a calibration sample) in the autosampler to collect a sample from (i.e., the position of the suction nozzle in each analysis step), what analysis conditions to apply to each analysis, at what timing during the automatic continuous analysis to execute a rinsing step for the flow path with a rinsing solution, and from which bottle in the autosampler to collect the rinsing solution in the rinsing step (i.e., the position of the suction nozzle in the rinsing step).

After performing the setting operation as described above, when the analysis operator instructs the start of automatic continuous analysis on the control device, the automatic continuous analysis by the autosampler and the analysis apparatus is executed under the control of the control device.

### CITATION LIST

### PATENT LITERATURE

[Patent Literature 1] Japanese Unexamined Patent Application Publication No. 2015-190801

### SUMMARY OF THE INVENTION

### TECHNICAL PROBLEM

However, since only relatively small-capacity bottles can be placed in the autosampler, it has been necessary to limit the number of steps (i.e., the number of analysis steps and rinsing steps) included in the continuous automatic analysis to prevent the rinsing solution, etc., in the bottles from being used up during the execution of the continuous automatic analysis.

Therefore, a configuration is conceivable in which one or more large-capacity bottles holding the rinsing solution, etc., are placed outside the autosampler, and the rinsing solution, etc., is collected from these large-capacity bottles. In that case, the sample analysis system is provided with a flow path switching valve for connecting one of a plurality of flow paths, through which the rinsing solution, etc., collected from the one or more large-capacity bottles flows, and a flow path, through which the liquid collected by the autosampler flows, to a flow path leading to the analysis apparatus, in addition to the aforementioned autosampler, analysis apparatus, and control device.

According to such a configuration, the number of steps that can be included in the continuous automatic analysis can be increased compared to the conventional art. On the other hand, however, there is a problem that the workload of the analysis operator during the setting operation increases because the analysis operator must preset the position of the flow path switching valve for each step, in addition to the position of the suction nozzle within the autosampler for each step. For example, for a step of analyzing a liquid sample held in any of the sample containers in the autosampler, it is necessary to set the suction nozzle tip to be inserted into the target sample container and also to set the position of the flow path switching valve so that the flow path through which the liquid sample collected by the autosampler flows is connected to the flow path leading to the analysis apparatus. For a step of analyzing a calibration sample held in the large-capacity bottle, it is necessary to set the suction nozzle to be at a predetermined standby position (e.g., a position where it is not inserted into any sample container or bottle, or a position where it is inserted into a specific sample container or bottle such as a rinsing solution bottle) and also to set the position of the flow path switching valve so that the flow path through which the liquid collected from the large-capacity bottle holding the calibration sample flows is connected to the flow path leading to the analysis apparatus. For a rinsing step, it is necessary to set the suction nozzle to be at the standby position and also to set the position of the flow path switching valve so that the flow path through which the liquid collected from the large-capacity bottle holding the rinsing solution flows is connected to the flow path leading to the analysis apparatus.

The present invention has been made in view of the above problems, and an object thereof is to provide a sample analysis system that can execute continuous automatic analysis with a larger number of steps than in the past and that allows for easy setting operations for the continuous automatic analysis.

### SOLUTION TO PROBLEM

A sample analysis system according to the present invention made to solve the above problems includes:
a sample analysis apparatus;
an autosampler including a plate placement unit where a sample plate having a plurality of sample accommodating portions each holding a liquid sample is placed, a nozzle for aspirating a liquid from any of the plurality of sample accommodating portions, a sampling flow path into which the liquid aspirated by the nozzle is sent, and a moving mechanism for moving the nozzle in horizontal and vertical directions;
one or more liquid supply units provided outside the autosampler;
a flow path switching valve for selectively connecting any one of the one or more liquid supply units and the sampling flow path to a flow path leading to the sample analysis apparatus; and
a control device for executing an automatic continuous analysis including a plurality of sample analysis steps and one or more rinsing steps by controlling at least the operations of the sample analysis apparatus, the autosampler, and the flow path switching valve,
wherein the control device includes:
   a selection receiving unit that displays, on a display screen, buttons or identifiers corresponding to each of the plurality of sample accommodating portions and each of the one or more liquid supply units, and allows a user to select, from among the buttons or the identifiers, a supply source of a liquid to be supplied to the sample analysis apparatus in each of the plurality of sample analysis steps and the rinsing step; and
   a liquid supply control unit that, for a step in which a button or an identifier corresponding to any of the plurality of sample accommodating portions is selected by the selection receiving unit among the plurality of sample analysis steps and the rinsing step, controls the moving mechanism so that the nozzle is inserted into the sample accommodating portion corresponding to the button or the identifier, and controls the flow path switching valve so that the sampling flow path is connected to the flow path leading to the sample analysis apparatus, and for a step in which a button or an identifier corresponding to the one or more liquid supply units is selected by the selection receiving unit, controls the flow path switching valve so that the liquid supply unit corresponding to the button or the identifier is connected to the flow path leading to the sample analysis apparatus, and controls the moving mechanism so that the nozzle is moved to a predetermined standby position.

### ADVANTAGEOUS EFFECTS OF INVENTION

According to the sample analysis system of the present invention having the above-described configuration, it is possible to execute continuous automatic analysis with a larger number of steps than in the past, and moreover, it is possible to easily perform the setting operation for the continuous automatic analysis.

### BRIEF DESCRIPTION OF DRAWINGS

[FIG. 1] FIG. 1 is a schematic configuration diagram of a sample analysis system according to an embodiment of the present invention.
[FIG. 2] FIG. 2 is a diagram showing an example of a rinsing condition setting screen in the sample analysis system.
[FIG. 3] FIG. 3 is a diagram showing an example of a sample/rinsing solution position selection screen in the sample analysis system.
[FIG. 4] FIG. 4 is a diagram showing an example of a batch setting screen in the sample analysis system.
[FIG. 5] FIG. 5 is a flowchart showing the control procedure of the flow path switching valve and the autosampler at the start of each analysis step and rinsing step of the automatic continuous analysis by the sample analysis system.
[FIG. 6] FIG. 6 is a diagram showing an example of a drop-down list in the sample analysis system.

### DESCRIPTION OF EMBODIMENTS

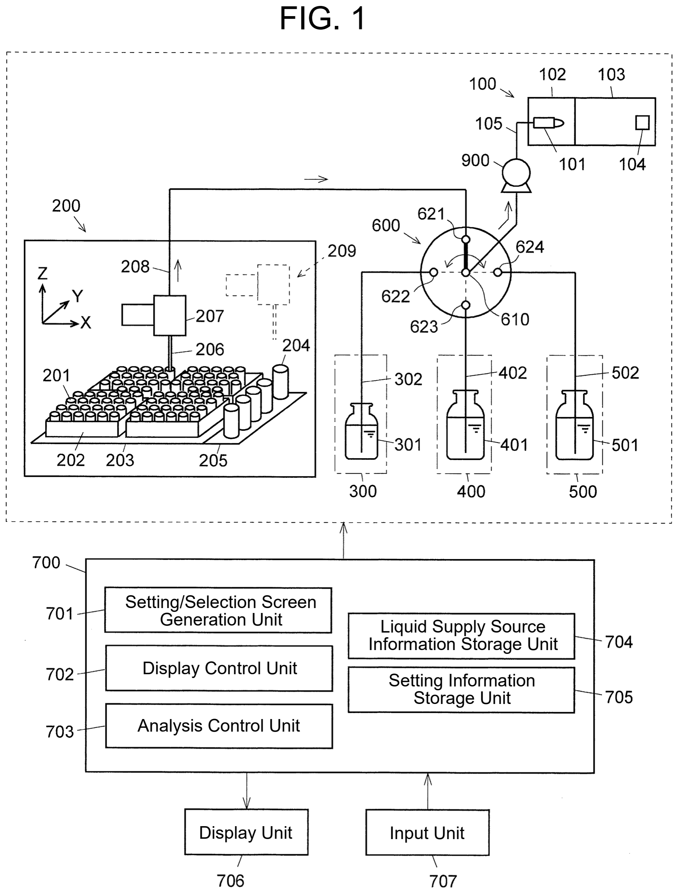

Hereinafter, an embodiment for carrying out the present invention will be described with reference to the drawings. FIG. 1 is a schematic configuration diagram of a sample analysis system according to the present embodiment. This sample analysis system (hereinafter, may be simply referred to as the system) is a system for performing automatic continuous analysis of a plurality of liquid samples, and includes a mass spectrometer 100 (corresponding to the sample analysis apparatus in the present invention), an autosampler 200, a calibration sample supply unit 300, a first rinsing solution supply unit 400, a second rinsing solution supply unit 500, a flow path switching valve 600, and a control device 700.

The mass spectrometer 100 is an ICP mass spectrometer including an ion source 102 that ionizes a sample by introducing a liquid sample into an inductively coupled plasma (ICP) generated by a plasma torch 101, a mass separation unit 103 that separates ions generated in the ion source 102 based on m/z (mass-to-charge ratio), and a detector 104 that detects the ions separated by the mass separation unit 103.

The autosampler 200 includes a tray placement unit 203 (corresponding to the plate placement unit in the present invention) where a plurality of sample trays 202 (corresponding to the sample plate in the present invention) can be placed; a bottle placement unit 205 (corresponding to the liquid container placement unit in the present invention) where one or more small-capacity bottles 204 (corresponding to the liquid container in the present invention), which are relatively small-capacity bottles holding a predetermined liquid, can be placed; a sampling needle 206 (corresponding to the nozzle in the present invention) that has a suction port at its tip and collects a liquid (a liquid sample or the predetermined liquid) from a plurality of sample containers 201 (corresponding to the sample accommodating portions in the present invention) loaded on the sample tray 202 or the small-capacity bottles 204 placed in the bottle placement unit 205; a needle moving mechanism 207 (corresponding to the moving mechanism in the present invention) including a motor or the like (not shown); and a sampling flow path 208 connected to the base end of the sampling needle 206. The sampling needle 206 is movable in the horizontal directions (X-axis and Y-axis directions in the figure) and the vertical direction (Z-axis direction in the figure) by the needle moving mechanism 207, and can move over the plurality of sample containers 201 and the plurality of small-capacity bottles 204 in the autosampler 200 to insert its tip into each of them. Furthermore, the sampling needle 206 can also move to a standby position 209 where its tip is not inserted into any of the plurality of sample containers 201 and the plurality of small-capacity bottles 204. Although the standby position is defined here as a position where the tip of the sampling needle 206 is not inserted into any sample container 201 or small-capacity bottle 204, a position where the tip of the sampling needle 206 is inserted into a specific sample container 201 or small-capacity bottle 204 may be used as the standby position instead.

Note that, here, a configuration is adopted in which the sampling flow path 208 is connected to the base of the sampling needle 206. However, a configuration may be adopted in which the sampling flow path 208 is connected to an injection port (not shown) provided in the autosampler 200, and after a liquid is collected by the sampling needle 206, the tip of the sampling needle 206 is inserted into the injection port to discharge the liquid, thereby sending the liquid into the sampling flow path 208.

The calibration sample supply unit 300 includes a calibration sample bottle 301, which is a large-capacity bottle storing a calibration sample, and a calibration sample flow path 302, one end of which is inserted into the calibration sample bottle 301 and through which the calibration sample collected from the bottle 301 flows. Here, "large-capacity" means that the volume is larger than that of the small-capacity bottle 204 described above (the same applies hereinafter). The first rinsing solution supply unit 400 includes a first rinsing solution bottle 401, which is a large-capacity bottle storing a first rinsing solution (e.g., water, a predetermined organic solvent, a mixture of water and a predetermined organic solvent, or a predetermined acid such as hydrochloric acid or nitric acid), and a first rinsing solution flow path 402, one end of which is inserted into the first rinsing solution bottle 401 and through which the first rinsing solution collected from the bottle 401 flows. The second rinsing solution supply unit 500 includes a second rinsing solution bottle 501, which is a large-capacity bottle storing a second rinsing solution, which is a different type of rinsing solution from the first rinsing solution, and a second rinsing solution flow path 502, one end of which is inserted into the second rinsing solution bottle 501 and through which the second rinsing solution collected from the bottle 501 flows. In the present embodiment, the calibration sample supply unit 300, the first rinsing solution supply unit 400, and the second rinsing solution supply unit 500 each correspond to the liquid supply unit in the present invention.

The flow path switching valve 600 is a four-way rotary valve having one outlet port 610 and four inlet ports. Hereinafter, the four inlet ports are referred to as a first port 621, a second port 622, a third port 623, and a fourth port 624, respectively. A mass analysis flow path 105 (corresponding to the "flow path leading to the sample analysis apparatus" in the present invention), which is a flow path leading to a plasma torch 101 provided in the ion source 102 of the mass spectrometer 100, is connected to the outlet port 610. A liquid-sending pump 900, comprising, for example, a peristaltic pump, is provided on the mass analysis flow path 105. The sampling flow path 208 of the autosampler 200 is connected to the first port 621, and the other end of the calibration sample flow path 302 is connected to the second port 622. The other end of the first rinsing solution flow path 402 is connected to the third port 623, and the other end of the second rinsing solution flow path 502 is connected to the fourth port 624. The flow path switching valve 600 can selectively switch between a state where the outlet port 610 and the first port 621 are connected (i.e., a state where the autosampler 200 is connected to the mass spectrometer 100), a state where the outlet port 610 and the second port 622 are connected (i.e., a state where the calibration sample supply unit 300 is connected to the mass spectrometer 100), a state where the outlet port 610 and the third port 623 are connected (i.e., a state where the first rinsing solution supply unit 400 is connected to the mass spectrometer 100), and a state where the outlet port 610 and the fourth port 624 are connected (i.e., a state where the second rinsing solution supply unit 500 is connected to the mass spectrometer 100).

The control device 700 includes a setting/selection screen generation unit 701, a display control unit 702, an analysis control unit 703, a liquid supply source information storage unit 704, and a setting information storage unit 705 (details of each unit will be described later). The functions of the control device 700 are realized by a computer (typically a personal computer) including a CPU, memory, and a large-capacity storage medium such as an HDD (Hard Disk Drive) or an SDD (Solid State Device). A predetermined program is installed in the computer in advance, and when the CPU executes this program, the functions of the setting/selection screen generation unit 701, the display control unit 702, and the analysis control unit 703 in this system are realized by software. The functions of the liquid supply source information storage unit 704 and the setting information storage unit 705 are realized by the large-capacity storage medium. A display unit 706 for displaying various information and an input unit 707 for a user to input various instructions are connected to the computer. The display unit 706 is composed of, for example, a liquid crystal display, and the input unit 707 is composed of, for example, a keyboard, a pointing device such as a mouse, or a touch panel attached to the display unit 706. In the present embodiment, the analysis control unit 703 corresponds to the liquid supply control unit in the present invention. The setting/selection screen generation unit 701, the display control unit 702, the display unit 706, and the input unit 707 jointly function as the selection receiving unit in the present invention.

In the liquid supply source information storage unit 704, information regarding the number of ports of the flow path switching valve 600 included in the system, an identifier for each port, and the connection destination of each port (e.g., an identifier representing the connection destination) is registered in advance. The identifier may be a character, a number, a symbol, or a combination thereof (the same applies hereinafter). Furthermore, in the liquid supply source information storage unit 704, plan view data showing the position of each sample container 201 and each small-capacity bottle 204 when the sample tray 202 and the small-capacity bottles 204 are placed in the autosampler 200 is stored for each type and number of sample trays 202 placed in the tray placement unit 203.

When performing automatic continuous analysis of a plurality of samples using the system according to the present embodiment, a user (analysis operator) places the sample tray 202 loaded with a plurality of sample containers 201 in the tray placement unit 203 of the autosampler 200, and also places the small-capacity bottles 204 holding a predetermined liquid (e.g., a standard sample, or a type of rinsing solution different from the first rinsing solution and the second rinsing solution described above) in the bottle placement unit 205 of the autosampler 200, and then performs a setting operation for the automatic continuous analysis. Hereinafter, the procedure of this setting operation will be described. In the following description, a case where four sample trays 202 of the 2 mL x 24 type (i.e., a type capable of loading 24 sample containers 201 with a capacity of 2 mL) are placed in the tray placement unit 203 will be described as an example.

In the setting operation, first, the user inputs a predetermined instruction to the control device 700 via the input unit 707. As a result, a predetermined setting screen (not shown) is generated by the setting/selection screen generation unit 701, and the setting screen is displayed on the screen of the display unit 706 under the control of the display control unit 702. The user operates the input unit 707 to specify the type ("2 mL x 24" here) and the number ("4" here) of the sample trays 202 set in the autosampler 200 on the setting screen.

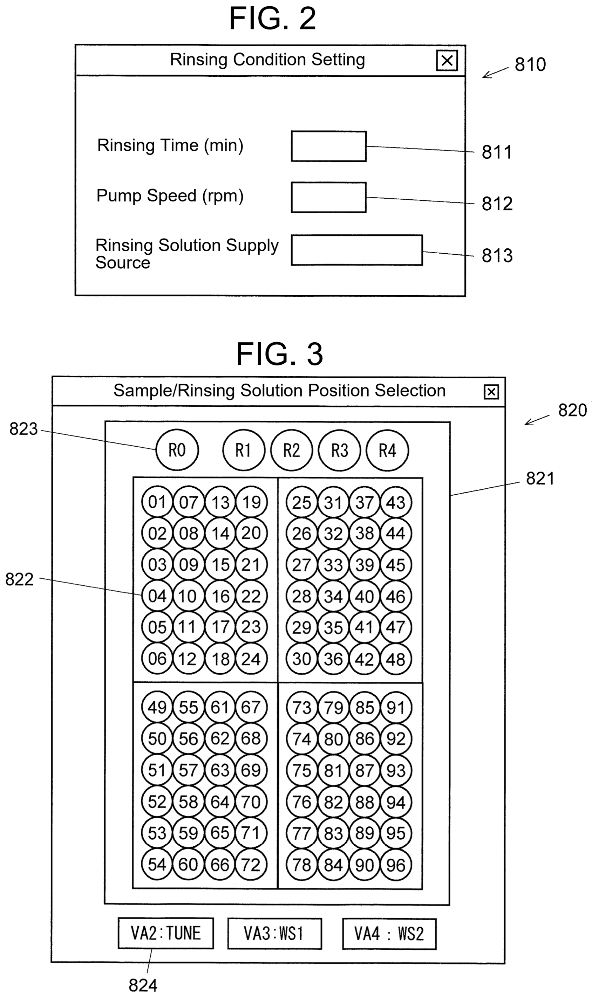

Subsequently, when the user inputs a predetermined instruction to the control device 700 via the input unit 707, a rinsing condition setting screen 810 as shown in FIG. 2 is generated by the setting/selection screen generation unit 701 and displayed on the screen of the display unit 706 under the control of the display control unit 702. This screen 810 is for the user to set the rinsing time, the rotation speed of the pump for supplying the rinsing solution (i.e., the liquid-sending pump 900), and the supply source of the rinsing solution for the rinsing step performed at a predetermined timing during the automatic continuous analysis (e.g., each time the analysis of each sample is completed). The execution timing of the rinsing step can be appropriately specified by the user on a predetermined setting screen (not shown).

The rinsing condition setting screen 810 is provided with a rinsing time input field 811, a pump rotation speed input field 812, and a rinsing solution supply source input field 813. The user operates the input unit 707 to input desired numerical values into the rinsing time input field 811 and the pump rotation speed input field 812. Subsequently, when the user selects the rinsing solution supply source input field 813, a sample/rinsing solution position selection screen 820 as shown in FIG. 3 is generated by the setting/selection screen generation unit 701 and displayed on the screen of the display unit 706 under the control of the display control unit 702.

The sample/rinsing solution position selection screen 820 includes a plan view 821 showing the position of each sample tray 202, the position of each sample container 201 on each sample tray 202, and the position of each small-capacity bottle 204 within the autosampler 200. As for this plan view 821, one corresponding to the type and number of the sample trays 202 specified by the user above is read from the liquid supply source information storage unit 704 and displayed. In this plan view, a graphic (a circle in the example of FIG. 3, but not limited to this) indicating the position of each sample container 201 and each small-capacity bottle 204 is a button. Hereinafter, the button indicating the position of each sample container 201 is referred to as a sample position button 822, and the button indicating the position of each small-capacity bottle 204 is referred to as a bottle position button 823. Each sample position button 822 is labeled with a unique identifier for each sample position ("01" to "96" in the example of FIG. 3), and each bottle position button 823 is labeled with a unique identifier for the position of each small-capacity bottle 204 ("R0" to "R4" in the example of FIG. 3).

The sample/rinsing solution position selection screen 820 further includes buttons (hereinafter referred to as valve port buttons 824) corresponding to the inlet ports 622 to 624 of the flow path switching valve 600 other than the one to which the autosampler 200 is connected, i.e., the second port 622, the third port 623, and the fourth port 624. Each valve port button 824 is labeled with an identifier corresponding to each of the inlet ports 621 to 624 and its connection destination. In the example of FIG. 3, the characters "VA2", "VA3", and "VA4" labeled on each valve port button 824 mean the second port 622, the third port 623, and the fourth port 624, respectively, and the subsequent characters "TUNE", "WS1", and "WS2" mean that the connection destinations of the ports 622, 623, and 624 are the calibration sample bottle 301, the first rinsing solution bottle 401, and the second rinsing solution bottle 501, respectively. These identifiers are registered in advance by the user or the like and stored in the liquid supply source information storage unit 704.

The user selects a button corresponding to an appropriate supply source of liquid in the rinsing step from among the buttons 822, 823, and 824 displayed on the sample/rinsing solution position selection screen 820. Hereinafter, it is assumed that the user has selected the valve port button 824 corresponding to the fourth port 624 of the flow path switching valve 600 on the sample/rinsing solution position selection screen 820. As a result, the fourth port 624 (strictly speaking, the second rinsing solution supply unit 500 connected to the port 624) is determined as the supply source of the rinsing solution in the rinsing step, and is stored in the setting information storage unit 705 together with the values of the rinsing time and the pump rotation speed input on the rinsing condition setting screen 810.

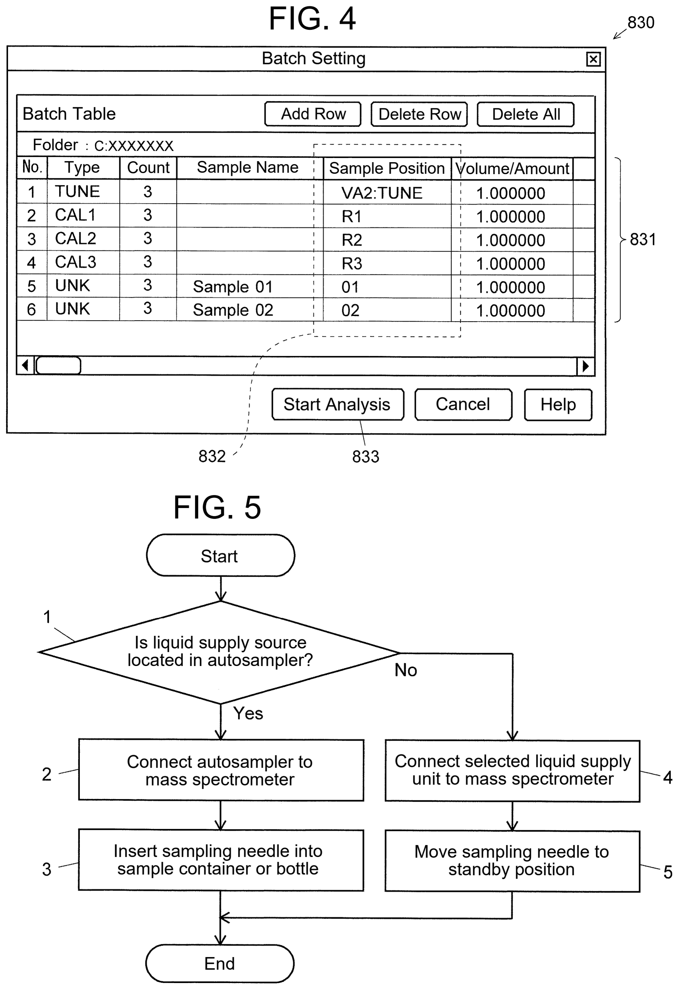

Subsequently, when the user inputs a predetermined instruction to the control device 700 via the input unit 707, a batch setting screen 830 as shown in FIG. 4 is generated by the setting/selection screen generation unit 701 and displayed on the screen of the display unit 706 under the control of the display control unit 702. The batch setting screen 830 includes a batch table 831 in which the execution order and the like of a plurality of analysis steps included in the automatic continuous analysis are described. In the batch table 831, one row corresponds to an analysis step for one sample, and in each row, information necessary for executing the analysis, such as the analysis category, the number of analyses, the name of the sample to be analyzed, the position of the sample to be analyzed, and the collection amount of the sample, is described. Here, the analysis category means the distinction between analysis for instrument calibration, analysis of a standard sample for creating a calibration curve, or analysis of an unknown sample. In the batch table 831 of FIG. 4, the character "TUNE" representing analysis for instrument calibration is described in the first row of the column where the analysis category is described (second column), the characters "CAL1", "CAL2", or "CAL3" indicating analysis of a standard sample for creating a calibration curve are described in the second to fourth rows, and the character "UNK" indicating analysis of an unknown sample is described in the fifth and sixth rows.

In the batch table 831, when the user selects any cell in the column where the position of the sample to be analyzed is described (hereinafter referred to as the sample position description column 832), a sample/rinsing solution position selection screen 820 similar to that shown in FIG. 3 is displayed on the screen of the display unit 706. The user presses an appropriate one of the sample position buttons 822, the bottle position buttons 823, and the valve port buttons 824 included in this sample/rinsing solution position selection screen 820 as the supply source of the sample in the analysis step corresponding to the row where the cell is located. As a result, the identifier corresponding to the pressed button is input into the cell on the batch table 831. For example, in the batch table 831 of FIG. 4, the character "VA2:TUNE", which is the identifier representing the second port 622 of the flow path switching valve 600 connected to the calibration sample supply unit 300, is described in the first row of the sample position description column 832, and the characters "R1", "R2", and "R3", which are the identifiers corresponding to specific small-capacity bottles 204 placed in the bottle placement unit 205 of the autosampler 200, are described in the second to fourth rows of the same column 832. In the fifth and sixth rows of the same column 832, the characters "01" and "02", which are the identifiers corresponding to the first and second sample containers 201 among the plurality of sample containers 201 loaded on the first sample tray 202 (the upper left sample tray 202 in FIG. 3) among the four sample trays 202 placed in the tray placement unit 203, are described.

When the user inputs the necessary items into the batch table 831 as described above and then presses the analysis start button 833 on the batch setting screen 830, the content described in the batch table 831 on the batch setting screen 830 is stored in the setting information storage unit 705 in association with the rinsing conditions described above, and the automatic continuous analysis based on the batch table 831 and the rinsing conditions is started.

In this automatic continuous analysis, the analysis steps defined in each row of the batch table 831 are executed in order, and the rinsing step defined in the rinsing conditions described above is executed at a predetermined timing. At the start of each of these steps (an analysis step or a rinsing step), the operations of the flow path switching valve 600 and the needle moving mechanism 207 of the autosampler 200 are controlled so that the sample or rinsing solution specified for the step in the batch table 831 or the rinsing conditions is supplied to the mass spectrometer 100. Hereinafter, the procedure at this time will be described with reference to the flowchart of FIG. 5.

First, the analysis control unit 703 determines whether the supply source of the liquid (sample or rinsing solution) to be used in the step to be executed (analysis step or rinsing step) exists within the autosampler 200, based on the batch table 831 or the rinsing conditions stored in the setting information storage unit 705 (Step 1). For example, if the step to be executed is an analysis step, the analysis control unit 703 refers to the identifier described in the sample position description column 832 in the row corresponding to the analysis step in the batch table 831. If the step to be executed is a rinsing step, it refers to the identifier indicating the supply source of the rinsing solution defined in the rinsing conditions. If the identifier corresponds to the position of a sample container 201 or a small-capacity bottle 204 in the autosampler 200, it is determined that the supply source of the liquid exists within the autosampler 200 (i.e., Yes in Step 1). Then, the analysis control unit 703 controls the flow path switching valve 600 so that the autosampler 200 is connected to the mass spectrometer 100 (i.e., the outlet port 610 and the first port 621 are connected) (Step 2), and further controls the needle moving mechanism 207 so that the tip of the sampling needle 206 is inserted into the sample container 201 or the small-capacity bottle 204 corresponding to the identifier (Step 3). Note that Step 2 and Step 3 may be performed in the reverse order. On the other hand, if the identifier is an identifier corresponding to the second port 622, the third port 623, or the fourth port 624 of the flow path switching valve 600, the analysis control unit 703 determines that the supply source of the liquid exists outside the autosampler 200 (i.e., No in Step 1). Then, the analysis control unit 703 controls the flow path switching valve 600 so that the port corresponding to the identifier among the second port 622, the third port 623, and the fourth port 624 is connected to the mass spectrometer 100 (i.e., the port corresponding to the identifier among the second port 622, the third port 623, and the fourth port 624 is connected to the outlet port 610) (Step 4), and further controls the needle moving mechanism 207 so that the sampling needle 206 moves to the standby position 209 described above (Step 5). Note that Step 4 and Step 5 may be performed in the reverse order.

After the control of the flow path switching valve 600 and the needle moving mechanism 207 is completed as described above, the liquid-sending pump 900 is operated to supply the sample or the rinsing solution to the mass spectrometer 100 to execute the analysis of the sample or the rinsing of the flow path.

As described above, according to the system of the present embodiment, by collecting the calibration sample, the first rinsing solution, and the second rinsing solution, which are liquids used in relatively large amounts, from the large-capacity bottles, i.e., the calibration sample bottle 301, the first rinsing solution bottle 401, and the second rinsing solution bottle 501, placed outside the autosampler 200, it is possible to avoid a shortage of the rinsing solution, etc., during the execution of the continuous automatic analysis, and it becomes possible to handle continuous automatic analysis with a larger number of steps than in the past. In addition, in the setting operation for the continuous automatic analysis, since it is not necessary for the user to separately set the position of the sampling needle 206 of the autosampler 200 and the position of the flow path switching valve, the user's workload can be reduced, and input errors by the user can be prevented.

Although the embodiment for carrying out the present invention has been described above with specific examples, the present invention is not limited to the above embodiment, and can be appropriately modified within the scope of the spirit of the present invention. For example, the sample analysis apparatus in the present invention may be any apparatus capable of analyzing a liquid sample, and for example, a mass spectrometer other than the ICP mass spectrometer described above (e.g., an electrospray ionization mass spectrometer or an atmospheric pressure chemical ionization mass spectrometer), or a liquid chromatograph or the like can be used.

The sample plate in the present invention is not limited to the sample tray 202 capable of being loaded with a plurality of sample containers 201 as described above, and may be, for example, a microplate having a plurality of wells (recesses) in which a liquid sample is held. In this case, the wells correspond to the sample accommodating portions in the present invention.

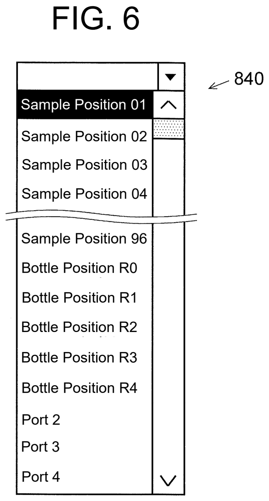

The selection receiving unit according to the present invention is not limited to one that allows the user to select an appropriate button on the sample/rinsing solution position selection screen 820 as shown in FIG. 3. For example, it may be one that displays a drop-down list 840 as shown in FIG. 6, which lists identifiers corresponding to the position of each sample container 201 and each small-capacity bottle 204 in the autosampler 200 and identifiers corresponding to each of the inlet ports 621 to 624 (other than the one to which the autosampler is connected) of the flow path switching valve 600, on the screen of the display unit 706, and allows the user to select an appropriate one from among the identifiers displayed in the drop-down list 840.

Although the system according to the above embodiment is configured to include the three liquid supply units of the calibration sample supply unit 300, the first rinsing solution supply unit 400, and the second rinsing solution supply unit 500, the number of liquid supply units in the present invention may be one, two, or four or more. In the above embodiment, the bottle placement unit 205 (corresponding to the liquid container placement unit) is configured to have five small-capacity bottles 204 (corresponding to the liquid containers) placed therein, but the liquid container placement unit in the present invention is not limited to this, and one, two to three, or five or more liquid containers may be placed therein.

### [Aspects]

It will be apparent to those skilled in the art that the exemplary embodiments described above are specific examples of the following aspects.

(Aspect 1) A sample analysis system according to one aspect of the present invention includes:
a sample analysis apparatus;
an autosampler including a plate placement unit where a sample plate having a plurality of sample accommodating portions each holding a liquid sample is placed, a nozzle for aspirating a liquid from any of the plurality of sample accommodating portions, a sampling flow path into which the liquid aspirated by the nozzle is sent, and a moving mechanism for moving the nozzle in horizontal and vertical directions;
one or more liquid supply units provided outside the autosampler;
a flow path switching valve for selectively connecting any one of the one or more liquid supply units and the sampling flow path to a flow path leading to the sample analysis apparatus; and
a control device for executing an automatic continuous analysis including a plurality of sample analysis steps and one or more rinsing steps by controlling at least the operations of the sample analysis apparatus, the autosampler, and the flow path switching valve,
wherein the control device includes:
   a selection receiving unit that displays, on a display screen, buttons or identifiers corresponding to each of the plurality of sample accommodating portions and each of the one or more liquid supply units, and allows a user to select, from among the buttons or the identifiers, a supply source of a liquid to be supplied to the sample analysis apparatus in each of the plurality of sample analysis steps and the rinsing step; and
   a liquid supply control unit that, for a step in which a button or an identifier corresponding to any of the plurality of sample accommodating portions is selected by the selection receiving unit among the plurality of sample analysis steps and the rinsing step, controls the moving mechanism so that the nozzle is inserted into the sample accommodating portion corresponding to the button or the identifier, and controls the flow path switching valve so that the sampling flow path is connected to the flow path leading to the sample analysis apparatus, and for a step in which a button or an identifier corresponding to the one or more liquid supply units is selected by the selection receiving unit, controls the flow path switching valve so that the liquid supply unit corresponding to the button or the identifier is connected to the flow path leading to the sample analysis apparatus, and controls the moving mechanism so that the nozzle is moved to a predetermined standby position.

According to the sample analysis system of Aspect 1, it is not necessary for a user to separately set the position of the sampling needle of the autosampler and the position of the flow path switching valve as in the prior art. Therefore, the setting operation for the automatic continuous analysis can be simplified, and the occurrence of input errors by the user can be reduced.

(Aspect 2) The sample analysis system according to Aspect 2 is the sample analysis system according to Aspect 1, wherein
the autosampler further includes a liquid container placement unit where one or more liquid containers are placed, and the nozzle aspirates a liquid from any of the plurality of sample accommodating portions and the one or more liquid containers,
the selection receiving unit further displays buttons or identifiers corresponding to each of the one or more liquid containers, and
the liquid supply control unit further, for a step in which a button or an identifier corresponding to any of the one or more liquid containers is selected by the selection receiving unit among the plurality of sample analysis steps and the rinsing step, controls the moving mechanism so that the nozzle is inserted into the liquid container corresponding to the button or the identifier, and controls the flow path switching valve so that the sampling flow path is connected to the flow path leading to the sample analysis apparatus.

According to the sample analysis system of Aspect 2, in addition to the sample accommodating portions and the liquid supply units, the liquid containers placed in the autosampler can also be selected by the selection receiving unit as a supply source of a liquid to be supplied to the sample analysis apparatus.

(Aspect 3) A program according to Aspect 3 causes a computer to function as the control device in the sample analysis system according to Aspect 1 or 2.

### REFERENCE SIGNS LIST

- 100: Mass spectrometer
- 200: Autosampler
- 201: Sample container
- 202: Sample tray
- 203: Tray placement unit
- 204: Small-capacity bottle
- 205: Bottle placement unit
- 206: Sampling needle
- 207: Needle moving mechanism
- 208: Sampling flow path
- 209: Standby position
- 300: Calibration sample supply unit
- 400: First rinsing solution supply unit
- 500: Second rinsing solution supply unit
- 600: Flow path switching valve
- 610: Outlet port
- 621: First port
- 622: Second port
- 623: Third port
- 624: Fourth port
- 700: Control device
- 701: Setting/selection screen generation unit
- 702: Display control unit
- 703: Analysis control unit
- 704: Liquid supply source information storage unit
- 705: Setting information storage unit
- 706: Display unit
- 707: Input unit
- 810: Rinsing condition setting screen
- 813: Rinsing solution supply source input field
- 820: Sample/rinsing solution position selection screen
- 821: Plan view
- 822: Sample position button
- 823: Bottle position button
- 824: Valve port button
- 830: Batch setting screen
- 831: Batch table
- 832: Sample position description column
- 840: Drop-down list

## Claims

1. A sample analysis system, comprising:
a sample analysis apparatus;
an autosampler including a plate placement unit where a sample plate having a plurality of sample accommodating portions each holding a liquid sample is placed, a nozzle for aspirating a liquid from any of the plurality of sample accommodating portions, a sampling flow path into which the liquid aspirated by the nozzle is sent, and a moving mechanism for moving the nozzle in horizontal and vertical directions;
one or more liquid supply units provided outside the autosampler;
a flow path switching valve for selectively connecting any one of the one or more liquid supply units and the sampling flow path to a flow path leading to the sample analysis apparatus; and
a control device for executing an automatic continuous analysis including a plurality of sample analysis steps and one or more rinsing steps by controlling at least the operations of the sample analysis apparatus, the autosampler, and the flow path switching valve,
wherein the control device includes:
a selection receiving unit that displays, on a display screen, buttons or identifiers corresponding to each of the plurality of sample accommodating portions and each of the one or more liquid supply units, and allows a user to select, from among the buttons or the identifiers, a supply source of a liquid to be supplied to the sample analysis apparatus in each of the plurality of sample analysis steps and the rinsing step; and
a liquid supply control unit that, for a step in which a button or an identifier corresponding to any of the plurality of sample accommodating portions is selected by the selection receiving unit among the plurality of sample analysis steps and the rinsing step, controls the moving mechanism so that the nozzle is inserted into the sample accommodating portion corresponding to the button or the identifier, and controls the flow path switching valve so that the sampling flow path is connected to the flow path leading to the sample analysis apparatus, and for a step in which a button or an identifier corresponding to the one or more liquid supply units is selected by the selection receiving unit, controls the flow path switching valve so that the liquid supply unit corresponding to the button or the identifier is connected to the flow path leading to the sample analysis apparatus, and controls the moving mechanism so that the nozzle is moved to a predetermined standby position.

2. The sample analysis system according to claim 1, wherein
the autosampler further includes a liquid container placement unit where one or more liquid containers are placed, and the nozzle aspirates a liquid from any of the plurality of sample accommodating portions and the one or more liquid containers,
the selection receiving unit further displays buttons or identifiers corresponding to each of the one or more liquid containers, and
the liquid supply control unit further, for a step in which a button or an identifier corresponding to any of the one or more liquid containers is selected by the selection receiving unit among the plurality of sample analysis steps and the rinsing step, controls the moving mechanism so that the nozzle is inserted into the liquid container corresponding to the button or the identifier, and controls the flow path switching valve so that the sampling flow path is connected to the flow path leading to the sample analysis apparatus.

3. A program for causing a computer to function as the control device in the sample analysis system according to claim 1 or 2.
